# EUROPEAN PATENT SPECIFICATION

(11) **EP 3 670 613 B1**
(45) Date of publication and mention of the grant of the patent: **06.10.2021**
(21) Application number: 18275189.1
(22) Date of filing: 20.12.2018
(51) Int. Cl.: C09D 5/08, C23C 22/84, B05D 1/34, B05D 1/36

(54) **ANTI-CORROSION COATING METHOD**
KORROSIONSSCHUTZBESCHICHTUNGSVERFAHREN
PROCÉDÉ DE REVÊTEMENT ANTICORROSION

(43) Date of publication of application: 24.06.2020
(73) Proprietor: Goodrich Actuation Systems Limited, West Midlands B90 4SS (GB)
(72) Inventor: AUJLA, Jasbir Singh, Solihull, West Midlands B90 4SS (GB)
(74) Representative: Dehns

(56) References cited:
- JP-A- 2004 083 771
- US-A1- 2007 095 435
- US-B1- 7 790 225

## Description

The present disclosure relates to a method of applying an anti-corrosion coating to substrates to form an anti-corrosion coating which is UV detectable. The method is particularly well adapted to coating aluminium and aluminium alloy substrates.

Anti-corrosion coatings, such as chemical conversion materials and the resulting coatings, are used to treat, salvage or repair surfaces that require corrosion protection. They are widely used with metals including aluminium and aluminium alloys, magnesium and magnesium alloys and zinc and zinc alloys. For example, chemical conversion materials are examples of anti-corrosion coatings which are applied to a metal substrate whereupon the metal can react with the chemical conversion material to produce a corrosion protective film, i.e. a chemical conversion coating.

Anti-corrosion coatings (e.g. chemical conversion materials and coatings) which are suitable for use in aerospace engineering ideally comply with certain requirements, e.g. may be REACH compliant.

Certain anti-corrosion coatings are discernible after application by colour (for example, some chemical conversion materials such as Alocrom/Alodine 1200), whereas in others, there is no way of detecting their presence visually (e.g. Bonderite MCR 871 Aero). For those materials that are not visually detectable, it is not immediately apparent whether they have been applied or not. This can lead to substrates being recoated unnecessarily in an attempt to ensure that they have corrosion protection.

In an attempt to address this issue, certain anti-corrosion coatings have been produced which contain a pigment or indicator in order for the end user to detect whether a part has been coated with the material. These are compositions which contain both the anti-corrosion coating (e.g. chemical conversion material) and an indicator compound in mixture. The resulting mixtures can have a limited shelf life, e.g. due to interaction between the ingredients, and often have reduced corrosion protection performance. For example, manufacturers of some anti-corrosion coatings have developed products which contain an ultraviolet fluorescing dye, but have discovered that the dye degrades the corrosion protection performance of the product. JP 2004 083771 A discloses a method for applying an anti-corrosion coating to a substrate such as aluminum, comprising applying a composition comprising an anti-corrosion inhibitor such as chromium (III) and a dye which exhibits fluorescence when exposed to ultraviolet radiation.

There is therefore a need for a method of applying an anti-corrosion coating (e.g. a chemical conversion coating) which allows the coating to be detected once applied, while retaining good corrosion protection performance. The invention is defined in the claims. Embodiments of the description not falling under the claims are only for illustrative purposes.

Viewed from a first aspect, the present disclosure provides a method for coating a substrate, e.g. for applying an anti-corrosion coating (e.g. a chemical conversion coating) to a substrate, the method comprising (in any order):
(a) applying an anti-corrosion composition (e.g. a chemical conversion material), and
(b) applying a dye which exhibits fluorescence when exposed to ultraviolet radiation.

In one aspect, the anti-corrosion composition and the dye are applied individually, i.e. they are not mixed prior to application. In one aspect, steps (a) and (b) are performed separately, e.g. sequentially. The application steps of the method disclosed herein may be performed at different times and/or via different means.

In one aspect, steps (a) and (b) are performed simultaneously. If steps (a) and (b) are performed simultaneously, the materials may be applied individually, but simultaneously, e.g. by co-spraying or co-spreading.

In one aspect, the method comprises applying the anti-corrosion composition to the substrate and subsequently applying the dye, e.g. onto said anti-corrosion composition and/or to the substrate. Alternatively, the method may comprise applying the dye to the substrate and subsequently applying the anti-corrosion composition (e.g. chemical conversion material), e.g. on top of the dye and/or onto the substrate.

The method as described herein can further comprise a second (or further) step of applying an anti-corrosion composition (e.g. a chemical conversion material). The further applications of anti-corrosion composition can be of the same or different composition or material to the first.

In some aspects the anti-corrosion coating consists of, or consists essentially of, the anti-corrosion composition and the dye as herein described.

In one aspect, the method comprises applying the dye to the substrate, followed by applying the anti-corrosion composition at least twice, e.g. as two or more separate coats or layers. In a further aspect, the method comprises applying the anti-corrosion composition at least twice, e.g. as two or more separate coats or layers, followed by applying the dye. The method may also comprise applying the anti-corrosion composition and the dye in an alternating fashion.

In one aspect, the method comprises:
(a) applying an anti-corrosion composition to the substrate,
(b) subsequently applying a dye which exhibits fluorescence when exposed to ultraviolet radiation onto the anti-corrosion composition and/or substrate, and
(c) subsequently applying an anti-corrosion composition.

Typically, in the method and products disclosed herein, the anti-corrosion composition and/or the dye will be applied or deposited as a coating or a layer. The anti-corrosion composition may be a chemical conversion material, e.g. which forms a chemical conversion coating on the substrate.

The substrate can be metallic, e.g. it may be or comprise aluminium, an aluminium alloy, zinc, a zinc alloy, magnesium or a magnesium alloy. In one aspect, the substrate is or comprises aluminium or an aluminium alloy.

The substrate may also consist of or comprise aluminium plated steel.

Aluminium alloys are those in which aluminium is the predominant metal. Typical alloying elements are scandium, copper, magnesium, manganese, silicon, iron, titanium, chromium, tin and zinc. Particular aluminium alloys include 1420, 2004, 2014, 2017, 2020, 2023, 2080, 2090, 2091, 2095, 2219, 2224, 2324, 2519, 2524, 4047, 6013, 6061, 6063, 6113, 6951, 7010, 7049, 7050, 7055, 7068, 7075, 7079, 7093, 7150, 7178, 7475 and 8009. Examples of aluminium alloys are the 7000 series and 2000 series aluminium alloys.

Other exemplary substrates include high copper aluminium substrates (i.e. substrates including an alloy containing both aluminium and copper, in which the amount of copper is relatively high, e.g. an amount of copper in the alloy of 3 to 4%).

The substrates onto which the method is applied can be part of a larger component or article (e.g. the substrate can be a veneer or layer on a component or article), or the substrate can be a whole component or article, i.e. the component or article is formed from the substrate material. Thus, the disclosure encompasses devices, components or articles comprising the substrates mentioned herein, e.g. where the substrate is a surface of a device, component or article. The substrate has a surface upon which the materials of the method are applied.

Anti-corrosion compositions are well known in the art. Typically, they comprise substances which inhibit corrosion of the substrate to be protected, or which react with the substrate to form a protective coating which inhibits corrosion. The resulting anti-corrosion coatings (e.g. chemical conversion coatings) may result in increased corrosion resistance and may also be used as a decorative finish.

The anti-corrosion compositions and coatings described may also be viewed as corrosion inhibition compositions and coatings. The anti-corrosion composition described herein may be a chemical conversion material. Similarly the, anti-corrosion coating described herein may be a chemical conversion coating. Chemical conversion coatings are used on metals and involve application of a material (chemical conversion material or coating) which may convert the substrate surface into a decorative or protective substance. Typically this conversion takes place via chemical processes between the surface of the substrate and the chemical conversion material. The resulting chemical conversion coating can be an oxide layer, e.g. a very thin oxide layer.

The anti-corrosion coating (e.g. chemical conversion coating) can be formed from or comprise any anti-corrosion composition (e.g. chemical conversion material) which is suitable for applying to the substrates described herein, e.g. an aluminium, aluminium alloy, zinc, zinc alloy, magnesium or magnesium alloy substrate. The term "anti-corrosion coating" may refer to the coating formed by application of the anti-corrosion composition and/or the coating resulting from all steps of the method herein disclosed, i.e. including the dye. The anti-corrosion composition may comprise a corrosion inhibiting cation, e.g. one or more cations of rare earth elements (such as cations of cerium, yttrium, praseodymium, neodymium), Group 1 (IA) metal cations (such as cations of lithium, sodium, potassium, rubidium, cesium, francium), Group 2 (IIA) metal cations (such as cations of beryllium, magnesium, calcium, strontium, barium, radium), Group 12 (2B) metal cations (such as cations of zinc), Group 4 (IVB) metal cations (such as cations of titanium or zirconium) and/or Group 6 (VIB) metal cations (such as cations of chromium, e.g. trivalent chromium).

Coatings and compositions suitable for applying to an aluminium or aluminium alloy substrate may be used. In one aspect, the anti-corrosion composition of the present disclosure can comply with industrial standards, such as being selected from the military specification referred to as MIL-DTL-5541.

The anti-corrosion coating which results from applying the anti-corrosion composition (e.g. chemical conversion coating) may be a combination of both metal(s) of the anti-corrosion composition and metal(s) of the substrate's surface. Anti-corrosion coatings such as chemical conversion coatings may involve a treatment for a metal surface where a metal substrate is contacted at least in part with a solution (e.g. an aqueous solution) comprising a different metal, where the substrate dissolves, leading to precipitation of a coating (optionally using an external driving force to deposit the coating on the metal substrate).

Examples of anti-corrosion coatings and chemical conversion materials include materials known as chemical film, yellow iridite and coatings from brand names such as Iridite, Bonderite and Alocrom/Alodine. Specific examples include Alochrom 1200, Iridite NCP, Surtec 650 and Bonderite MCR 871 Aero. In a certain aspect of the present disclosure, the chemical conversion material is Bonderite M-CR 871 Aero (also known as Alodine® 871), available from Henkel.

In some aspects, the anti-corrosion composition of the present disclosure may comprise a metal silicate (e.g. magnesium metasilicate), a metal molybdate (e.g. zinc molybdate, sodium molybdate, magnesium molybate and/or copper molybdate) and/or a metal phosphate silicate. In some aspects, the anti-corrosion composition of the present disclosure may comprise trimethylbenzene, sodium perborate, thiourea, zinc stearate, zinc nitrate, zinc oxide, calcium carbonate, dihydric phosphate and/or sodium phosphates such as sodium hexametaphosphate.

In some aspects, the anti-corrosion composition comprises the following by weight: 8-10 parts of sodium molybdate, 4-5 parts of magnesium molybdate, 2-4 parts of copper molybdate, 12-14 parts of dihydric phosphate, 5-8 parts of sodium hexametaphosphate, 2-5 parts of zinc oxide, 1.5-2.5 parts of trimethylbenzene, 2.5-3.5 parts of sodium perborates, 2.2-3.8 parts of thiourea, 4.5-5.5 parts of zinc stearate, 0.8-1.2 parts of calcium carbonate (e.g. ground calcium carbonate) and 0.5-0.8 parts of zinc nitrite.

In some aspects, the anti-corrosion coating of the present disclosure can be an oxide coating, a phosphate coating or a chromate coating. Chemical conversion coatings of these types are well known.

Oxide coatings can be black oxide. Black oxide for ferrous materials can be magnetite (Fe₃O₄). Black oxide for ferrous materials can be applied by using a bath of sodium hydroxide, nitrates and nitrites to convert the surface of the substrate to be coated into magnetite. Black oxide for copper is known as Ebonol C. This converts the copper surface to cupric oxide. Black oxide for zinc can be known as Ebonol Z or Ultra-Blak 460. Oxide coatings can also be formed by anodizing. In some aspects, the anti-corrosion composition of the present disclosure may comprise zinc oxide.

Phosphate coatings can include manganese, zinc and/or iron, e.g. manganese phosphate, zinc phosphate and/or iron phosphate. Phosphate coatings may comprise dihydric phosphate and/or sodium phosphates such as sodium hexametaphosphate. Examples of phosphate coatings include Parkerize and Lubrite. Phosphate coatings may be used on aluminium, zinc, cadmium, silver and tin. Manganese, zinc and/or iron phosphate salts can be dissolved in a solution of phosphoric acid and the surface of the substrate to be coated can be placed into the solution. Alternatively, the solution (i.e. the anti-corrosion coating (e.g. chemical conversion material) as herein described) can be applied to the surface of the substrate to be coated.

In one aspect, the anti-corrosion coating is a chromate coating, e.g. a chromate chemical conversion coating. Suitable chromate coatings can be formed through the interaction of chromium salts or chromium acid with water solutions. Examples of chromate coatings include Alodine or Iridite. Suitable chromate coatings can comprise hexavalent chromium and/or trivalent chromium, e.g. Bonderite MCR 871 Aero or Bonderite MCR 1132 Aero (also known as Alodine® 1132). Chromate coatings according to the present disclosure can include one or more of chromium (IV) oxide, barium nitrate, sodium silicofluoride and ferricyanide. Chromate coatings according to the present disclosure can form a chemical film on aluminium or can be used to passivate steel, aluminum, zinc, cadmium, copper, silver, magnesium and tin alloys. In an aspect, the anti-corrosion composition of the present disclosure comprises trivalent chromium. The anti-corrosion coating may be a chromium (III) chemical conversion coating.

The dye according to the present disclosure exhibits fluorescence when exposed to electromagnetic radiation in the ultraviolet (UV) range, e.g. with a wavelength from 10 nm to 400 nm.

The dye may be selected from those which are approved to Aerospace Material Specification (AMS) 2644. For example, suitable dyes include those approved to AMS 2644 type 1, method A, sensitivity levels 2, 3 or 4. Type 1 is a fluorescent dye and method A is water washable. QPL-AMS-2644 (Qualified Products List of Products Qualified Under SAE Aerospace Material Specification AMS 2644) provides a list of products approved to the various types, methods and sensitivity levels.

Suitable dyes for use as described herein include those that meet the criteria of AMS 2644 or are listed in the Qualified Products List QPL-AMS-2644.

In some aspects, the dye is one that absorbs light in the ultraviolet range, e.g. 275 to 400 nm and emits light in the ultraviolet blue spectrum, e.g. 400-500 nm.

In some aspects, when the dye is applied, no obvious colour change occurs. The dye can appear colourless or substantially colourless in the visible light spectrum.

Examples of suitable dyes include ARDROX 970P23, ARDROX 970P23E, ARDROX 970P24, ARDROX 970P24E, P133D, P133E, P134E, 9732, BRITEMOR 4455, BRITEMOR 4455A, ZL-60C and ZL-60D. In a certain aspect, the dye is a Zyglo dye.

Further examples of suitable dyes include those marketed as Zyglo ZL-30, Fluorol 7GA, Calcofluor Yellow, Azsol Brilliant Yellow 6GF, Rhodamine B, Calcolfuor White RW, Blancophor White AW, Auramine, and Eosine G.

In one aspect, the dye according to the present disclosure can be a water soluble dye. The dye may comprise one or more of the following: 4,4'-bis-(2-sulfostyryl)-biphenyl disodium salt, bistriazinyl derivatives of 4,4'-diaminostilbene-2-2'-disulfonic acid, sulfonated 2-(stilbene-4-yl) naptholtriazoles, bis(azol-2-yl)stilbenes, bisstyrylbiphenyl sodium salt and sulfonated pyrazolines. The dye can contain a luminescence pigment selected from oxides, sulphides, or oxide sulphides or a metal or semimetal. The metal or semimetal can be chosen from aluminium, germanium, silicon, scandium, yttrium, lanthanum, cerium, praseodymium, neodymium, samarium, europium, gadolinium, terbium, dysprosium, holmium, erbium, thulium, ytterbium or lutetium.

The anti-corrosion composition can be applied using any conventional technique, such as dip immersion, spraying or spreading, e.g. spreading using a brush, roller, applicator pen (e.g. Touch-N-Prep®, available from Henkel) or the like. For application by spraying, automatic or manual spray techniques can be used. In a certain aspect, the anti-corrosion composition is applied using an applicator pen (e.g. Touch-N-Prep®).

In one aspect, the anti-corrosion composition is applied in a uniform layer, e.g. to form a uniform coating. It may be useful for more than one, e.g. two, applications of anti-corrosion composition to be made in order to achieve a uniform layer, e.g. in terms of thickness, or degree of surface coverage. A uniform layer can help to ensure consistent corrosion protection.

In a certain aspect, the anti-corrosion composition is applied in one direction (e.g. left to right or up to down), and the second coat is applied in another, e.g. substantially perpendicular, direction (e.g. up to down or left to right). The method of applying anti-corrosion composition in one direction and then applying anti-corrosion composition in the other direction can be used in a variety of application techniques as described herein, e.g. with an applicator pen (e.g. Touch-N-Prep^{®}).

The amount of anti-corrosion composition applied depends on the surface and substrate to be covered. In a certain aspect, the anti-corrosion composition is applied such that it covers the entire surface of the substrate to be covered (e.g. the area to be protected against corrosion). The thickness of the anti-corrosion coating applied can be less than or equal to 10 µm, less than or equal to 5 µm, less than or equal to 1 µm. In certain aspects, the thickness of the anti-corrosion coating (e.g. chemical conversion coatings) can be 0.001 to 10 µm, 0.001 to 5 µm, 0.001 to 1 µm, 0.01 to 10 µm, 0.01 to 5 µm, 0.01 to 1 µm, 0.1 to 10 µm, 0.1 to 5 µm, or 0.1 to 1 µm.

The dye can be applied using any conventional technique, such as dip immersion, spraying or spreading, e.g. spreading using a brush, roller, applicator pen, cotton bud or the like. For application by spraying, automatic or manual spray techniques can be used. In a certain aspect, the dye is applied using a cotton bud.

The dye can be applied as a complete layer, i.e. the dye layer can cover or substantially cover the entire area of the substrate for which protection is required, or the area upon which the anti-corrosion composition is applied. In an alternative aspect, the layer of dye does not completely cover the entire area, e.g. covers up to 10% of the area (e.g. 0.1 to 5%), 10% to 90% of the area, 20% to 75% of the area, 30% to 60% of the area, greater than or equal to 50% of the area or greater than or equal to 90% of the area.

The way in which the surface is covered with the dye can be varied. The dye can be applied in any way and in any style. In one aspect, the dye is applied to cover the surface sufficiently so that the dye's presence is detectable under UV light.

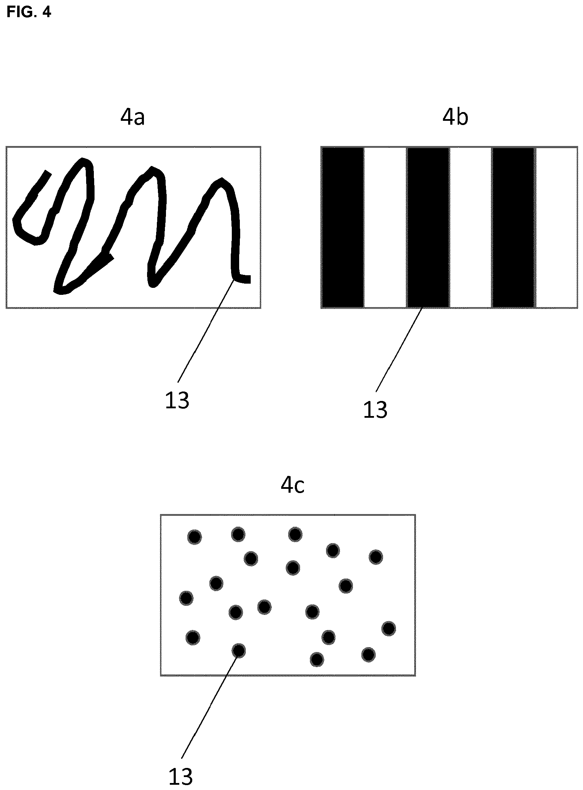

The dye can be applied as a line on the surface, e.g. as shown in Figure 4a. The dye can be applied as multiple stripes across the surface, e.g. as shown in Figure 4b. The stripes can be of varying thickness and directions. The dye can be applied as spots on the surface, e.g. as shown in Figure 4c. The spots can be of varying sizes and in varying positions and amounts over the surface. Any pattern can be made using the dye on the surface, e.g. it can be used to make a distinguishing mark.

The dye can be applied before the application of the anti-corrosion composition, between applications of anti-corrosion composition and/or after the anti-corrosion composition has been applied. In a certain aspect, one coat of the anti-corrosion composition is applied, the dye is applied and then a second coat of anti-corrosion composition is applied.

The anti-corrosion composition and the dye may be applied independently as continuous layers, or as a discontinuous application. If the first material (i.e. anti-corrosion composition or dye) to be applied to the substrate does not fully cover the area to be protected, then the following material can be applied on top of the first material, on top of the substrate (i.e. on parts of the substrate which the first material is not), or both. Similarly, subsequent materials may, or may not, be applied directly on top of the material that was applied previously.

In some aspects, the anti-corrosion composition is applied such that it covers all, or substantially all, of the area of the substrate for which protection is required. This may be achieved by a single, uniform layer of material, or by subsequent applications of the material ensuring uniform coverage across the area to be protected.

The amount of dye applied should be enough to provide a visible marking when exposed to UV, e.g. for a part surface of around 0.0013 m², one drop of dye may be sufficient.

Before applying the materials according to the method as herein described, the surface of the substrate can be cleaned using any conventional technique in the art such as using conventional cleaners or solvents to remove grease, dirt or other extraneous matter. Inclusion of such a cleaning step forms a further aspect of the present disclosure. Conventional cleaners include acetone and ProClean. Solvents suitable for cleaning the surface include acetone, hexanes, pentanes, propanes, isopropanol, ethanol, methanol and water. Alternative methods of cleaning the surface of the substrate before applying the anti-corrosion composition include using a moistened abrasive pad (to remove oxides from the surface of the metal) and wiping the substrate, e.g. with a damp lint-free cloth (to ensure complete removal of soils and dislodged oxides generated from the previous step).

The cleaning step can be followed by or preceded by a water rinse.

Between applications of the anti-corrosion composition and/or dye, the previously applied material is typically allowed to dry before the next material is applied. This minimizes mixing of the two materials. In some aspects, 0.5, 1, 2, 3, 5 or 10 min is allowed between the application of each material. In some aspects, an applied material is dried completely before a further material is applied. In some aspects, an applied material can be air dried and/or force-dried with hot air. In some aspects, the anti-corrosion composition or coating and the dye are present on the substrate as distinct entities, i.e. they do not mix with one another.

If an applicator pen is used to apply the anti-corrosion composition, the method of application can be as follows:
a. press the pen down on the surface until the solution fills the pen tip
b. apply the anti-corrosion composition with firm, smooth, even strokes, covering all edges. Overlap each stroke and allow to dry;
c. within 5 min of applying the first coat, apply the dye;
d. within 5 min of applying the dye, apply a second coat at a 90° angle to the first coat with the same, smooth, firm stroke;
e. allow the coating to air dry thoroughly.

In a further aspect, the present disclosure comprises a substrate on which an anti-corrosion coating and a dye as herein described has been applied, e.g. a substrate (or a component or article comprising the substrate) coated with the materials described herein. The present disclosure also provides components, articles or devices comprising the substrate as herein described. The substrate may be a surface of the component, article or device, or may be a layer on the component, article or device.

In one aspect, the present disclosure comprises a substrate on which the method of applying the anti-corrosion coating (e.g. chemical conversion coating) as discussed herein has been applied.

The substrate can be in the form of, or be the surface of, a metal sheet or fabricated part. Such parts include parts for aircraft, aerospace, missiles, vehicles, trains, electronic devices, apparatuses, construction equipment, military equipment, sport equipment, among others.

The substrate or component may be selected from aircraft components such as gas turbine engine components, turbine vanes and blades, propeller-blades, -shanks, - hubs, -barrels and -tulips, landing gear components, engine gears, engine discs, shafts, struts and counterweights.

In one aspect, the present disclosure comprises a device (e.g. a gas turbine engine, a highlift actuator, a highlift system, or component thereof) comprising a substrate, or component comprising a substrate, on which the method as discussed herein has been applied.

In one aspect, the present disclosure provides a coated substrate (e.g. a substrate as herein described) which comprises at least one coating of anti-corrosion coating as herein described and at least one coating of a dye as herein described, which can be present any order.

In a further aspect, the present disclosure provides a coated substrate (e.g. a substrate as herein described) which comprises a coating of anti-corrosion coating as herein described and a coating of dye as herein described on top of the layer of anti-corrosion coating. A further layer of anti-corrosion coating may be present on top of the dye and/or on top of the first coating or substrate.

In a further aspect, the present disclosure provides a component comprising a coating on a surface of said component, said coating comprising a layer of anti-corrosion composition (as herein described) and a layer of a dye which exhibits fluorescence when exposed to ultraviolet radiation (as herein described).

The component may be a coated substrate, a device or an article as described herein. The surface of the component may be the substrate as described herein. As described above, the materials (i.e. the anti-corrosion composition and the dye) may be present as continuous or discontinuous layers of coatings. The materials may be present in the coating any of the configurations described herein in relation to the method.

In some aspects, the anti-corrosion composition and the dye are substantially separate from one another i.e. there is minimal mixing of the two materials.

In one aspect, the present disclosure provides a kit comprising the anti-corrosion composition as herein described (e.g. in the form of an applicator pen such as Touch-N-Prep^{®}), a dye as herein described, and instructions outlining the method for application as herein described.

The method can be easily integrated into existing coating procedures, whenever convenient. The method of the present disclosure could therefore be mandated by a process specification (e.g. the instructions mentioned herein) which could specify the method which must be used in order to apply (and optionally detect) the anti-corrosion coating as herein disclosed.

The method of the present disclosure provides a simple but effective way of applying an anti-corrosion coating which is easily detectable. The method can utilise commercially available anti-corrosion compositions (e.g. chemical conversion materials) and dyes, e.g. those which have a long shelf life. A further aspect of the disclosure therefore includes the step of viewing the coated substrate (described herein) under UV light, e.g. in a dark room. This allows identification of the substrates that have been coated according to the coating method disclosed herein.

A further aspect of the present disclosure therefore relates to a method of detecting coated parts or detecting the presence of an anti-corrosion coating, e.g. identifying whether a substrate has been coated by the method as herein described. The method of detecting coated parts comprises providing a part (e.g. a substrate coated as herein described or any of the devices, components and articles described herein) and viewing it under UV light. Parts which have been coated as described therein will be identified by the fluorescence of the dye. A further aspect of the present disclosure thus involves viewing the coated substrate (as described herein in relation to products and methods) under UV light. Detecting the presence of an anti-corrosion coating may be useful in quality control procedures.

In one aspect, the present disclosure provides a method of detecting the presence of an anti-corrosion coating, said method comprising:
a. applying an anti-corrosion coating as described herein and
b. viewing the coated substrate under UV light.

The UV light can be provided by a UV device. Examples of UV devices include UV-LED products, e.g. UV-LED products at wavelengths of 265, 280, 285 or 300 nm. The UV devices can be mounted on carrier.

References to "comprises" and/or "comprising," should be understood to also encompass "consist(s) of", "consisting of", "consist(s) essentially of" and "consisting essentially of".

Certain aspects of the present disclosure will now be described in greater detail, by way of example only and with reference to the accompanying drawings, in which:
Figure 1 is a photograph taken under UV light of the part used to test the invention.
Figure 2 shows three possible coated substrates.
Figure 3 shows two possible coated substrates.
Figure 4 shows possible applications of the dye.

The methods of the disclosure will now be described in relation to the Figures.

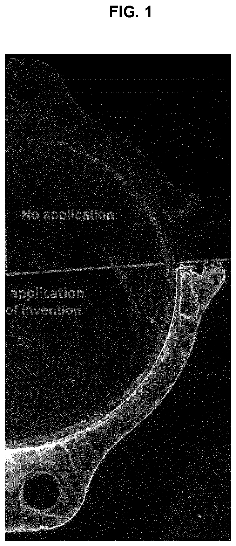

Figure 1 shows where the applicator pen was applied in the method described in Example 1.

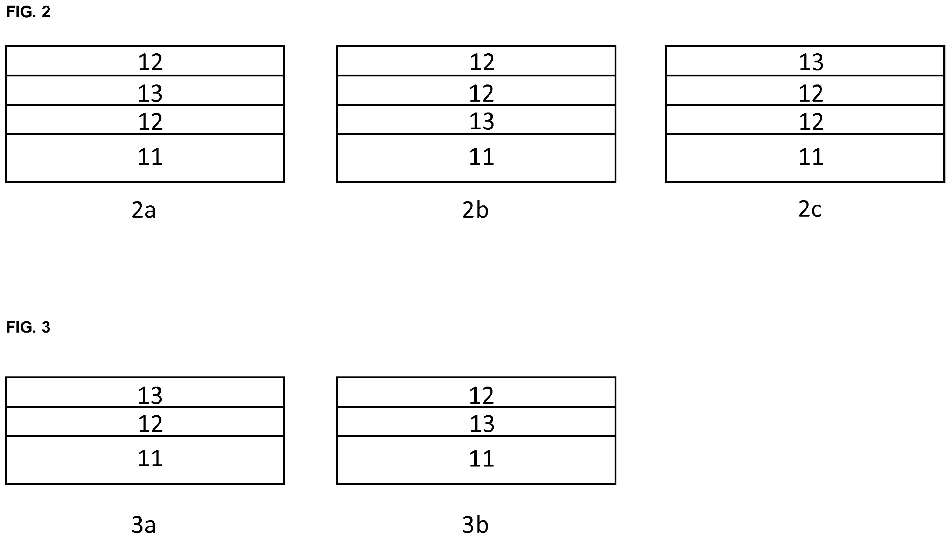

Figure 2 shows three separate schematics showing the substrate coated with the UV detectable anti-corrosion coating. Figure 2a shows substrate 11 coated with a layer of anti-corrosion composition 12, a layer of dye 13 and a further layer of anti-corrosion composition 12. Figure 2b shows substrate 11 coated with a layer of dye 13, and two further layers of anti-corrosion composition 12. Figure 2c shows substrate 11 coated with two layers of anti-corrosion composition 12 and a further layer of dye 13.

Figure 3 shows two separate schematics showing the substrate coating with the UV detectable anti-corrosion coating. Figure 3a shows substrate 11 coated with a layer of anti-corrosion composition 12 and a further layer of dye 13. Figure 3b shows substrate 11 coated with a layer of dye 13 and a further layer of anti-corrosion composition 12.

Figure 4 shows the application of the dye 13. In one aspect, the dye is applied as a random line on the surface as exemplified in Figure 4a. In an alternative aspect, the dye is applied as multiple stripes across the surface as exemplified in Figure 4b. As would be appreciated, the stripes can be of varying thicknesses and directions. In an alternative aspect, the dye is applied as spots (or any other marking) over the surface, as exemplified in Figure 4c. As will be appreciated, the spots can be of varying sizes and in varying positions over the surface.

### Example 1

A part (CH3511-0915) was machined from AMS 4124 aluminium alloy and chromic acid anodised according to 914-032-095. The mating face was abraded in order to remove any residual chemical conversion coating. A single coat of chemical conversion material was applied using an applicator pen (Touch-N-Prep^{®} Henkel Bonderite MCR 871 Aero), allowed to dry, and then followed by a layer of Zyglo sensitivity level 2 dye. After the dye was allowed to dry, a second coat was made using the applicator pen (Touch-N-Prep^{®} Henkel Bonderite MCR 871 Aero) at right angles to the first coat. This part was exposed to UV radiation and it was found that the coated surface exhibited fluorescence under these conditions. The part was then tested for corrosion performance in accordance with ASTM B117. ASTM B117 is the standard practice for operating salt spray apparatus and provides a controlled corrosive environment.

Figure 1 shows where the applicator pen (Touch-N-Prep^{®}) has been applied. The lower part of the photograph is where an initial application of chemical conversion coating (Henkel Bonderite MCR 871 Aero) was applied using the applicator pen (Touch-N-Prep^{®}) and this was allowed to dry. One drop of dye (Zyglo sensitivity level 2 dye) was applied to a clean cotton bud, which was swabbed across the surface of the part and allowed to dry. A second coat of the chemical conversion coating using the applicator pen (e.g. Touch-N-Prep^{®}) was applied. The top part of the photograph shows where the chemical conversion coating has not been applied according to the invention.

It was found that after 120 hours and 500 hours of corrosion testing there were no signs of corrosion in the target area.

## Claims

1. A method for applying an anti-corrosion coating to a substrate, the method comprising:
(a) applying an anti-corrosion composition, and
(b) applying a dye which exhibits fluorescence when exposed to ultraviolet radiation, said method further comprising a further step of applying an anti-corrosion composition,
wherein the substrate is an aluminium substrate or an aluminium alloy substrate, and wherein the anti-corrosion composition and the dye are applied individually.

2. The method according to claim 1 comprising:
(a) applying the anti-corrosion composition to the substrate,
(b) subsequently applying the dye, and
(c) subsequently applying an anti-corrosion composition.

3. The method according to claim 1 or claim 2 wherein the anti-corrosion coating is a chromium (III) chemical conversion coating.

4. The method according to any preceding claim wherein the dye is a Zyglo dye.

5. The method according to any preceding claim wherein the anti-corrosion composition is applied using an applicator pen.

6. The method according to any preceding claim further comprising viewing the coated substrate under UV light.

7. A coated substrate on which the method of applying an anti-corrosion coating according to any preceding claim has been applied.

8. A substrate which is coated with a coating of anti-corrosion composition, a coating of a dye which exhibits fluorescence when exposed to ultraviolet radiation on top of the layer of anti-corrosion coating, and a further layer of anti-corrosion coating present on top of the dye, wherein the substrate is an aluminium substrate or an aluminium alloy substrate.

9. The substrate according to claim 8 wherein the anti-corrosion coating is a chromium (III) chemical conversion coating.

10. The substrate according to claim 8 or claim 9 wherein the dye is a Zyglo dye.

11. A device comprising a coated substrate according to any one of claims 7 to 10.

12. The device according to claim 11, wherein the device is a highlift actuator.

## Patentansprüche

1. Verfahren zum Auftragen einer Antikorrosionsbeschichtung auf ein Substrat, wobei das Verfahren Folgendes umfasst:
(a) Auftragen einer Antikorrosionszusammensetzung, und
(b) Auftragen einer Farbe, welche Fluoreszenz aufweist, wenn sie ultravioletter Strahlung ausgesetzt ist,
wobei das Verfahren weiter einen weiteren Schritt eines Auftragens einer Antikorrosionszusammensetzung umfasst,
wobei das Substrat ein Aluminiumsubstrat oder ein Aluminiumlegierungssubstrat ist, and wobei die Antikorrosionszusammensetzung und die Farbe einzeln aufgetragen werden.

2. Verfahren nach Anspruch 1, umfassend:
(a) Auftragen der Antikorrosionszusammensetzung auf das Substrat,
(b) danach Auftragen der Farbe, und
(c) danach Auftragen einer Antikorrosionszusammensetzung.

3. Verfahren nach Anspruch 1 oder Anspruch 2, wobei die Antikorrosionsbeschichtung eine chemische Chrom (III)-Konversionsbeschichtung ist.

4. Verfahren nach einem der vorstehenden Ansprüche, wobei die Farbe eine Zyglo-Farbe ist.

5. Verfahren nach einem der vorstehenden Ansprüche, wobei die Antikorrosionszusammensetzung mithilfe eines Auftragungsstifts aufgetragen wird.

6. Verfahren nach einem der vorstehenden Ansprüche, ferner umfassend ein Betrachten des beschichteten Substrats unter UV-Licht.

7. Beschichtetes Substrat, auf welchem das Verfahren eines Auftragens einer Anti-Korrosionsbeschichtung nach einem der vorstehenden Ansprüche angewandt wurde.

8. Substrat, welches mit einer Antikorrosionszusammensetzung, einer Beschichtung aus einer Farbe, welche Fluoreszenz aufweist, wenn sie ultravioletter Strahlung ausgesetzt ist, über der Schicht einer Antikorrosionsbeschichtung und einer weiteren Schicht einer Antikorrosionsbeschichtung beschichtet ist, welche auf der Farbe vorhanden ist, wobei das Substrat ein Aluminiumsubstrat oder ein Aluminiumlegierungssubstrat ist.

9. Substrat nach Anspruch 8, wobei die Antikorrosionsbeschichtung eine chemische Chrom (III)-Konversionsbeschichtung ist.

10. Substrat nach Anspruch 8 oder 9, wobei die Farbe eine Zyglo-Farbe ist.

11. Vorrichtung, umfassend ein beschichtetes Substrat nach einem der Ansprüche 7 bis 10.

12. Vorrichtung nach Anspruch 11, wobei die Vorrichtung ein Hochauftriebsaktor ist.

## Revendications

1. Procédé d'application d'un revêtement anti-corrosion sur un substrat, le procédé comprenant :
(a) l'application d'une composition anti-corrosion, et
(b) l'application d'un colorant qui présente une fluorescence lorsqu'il est exposé à un rayon ultraviolet,
ledit procédé comprenant en outre une étape supplémentaire d'application d'une composition anti-corrosion,
dans lequel le substrat est un substrat en aluminium ou un substrat en alliage d'aluminium, et
dans lequel la composition anti-corrosion et le colorant sont appliqués individuellement.

2. Procédé selon la revendication 1, comprenant :
(a) l'application de la composition anti-corrosion sur le substrat,
(b) l'application ultérieure du colorant, et
(c) l'application ultérieure d'une composition anti-corrosion.

3. Procédé selon la revendication 1 ou la revendication 2, dans lequel le revêtement anti-corrosion est un revêtement de conversion chimique au chrome (III).

4. Procédé selon une quelconque revendication précédente, dans lequel le colorant est un colorant Zyglo.

5. Procédé selon une quelconque revendication précédente, dans lequel la composition anti-corrosion est appliquée à l'aide d'un stylo applicateur.

6. Procédé selon une quelconque revendication précédente, comprenant en outre la visualisation du substrat revêtu sous une lumière UV.

7. Substrat revêtu sur lequel le procédé d'application d'un revêtement anti-corrosion selon une quelconque revendication précédente a été appliqué.

8. Substrat qui est revêtu d'un revêtement de composition anti-corrosion, un revêtement d'un colorant qui présente une fluorescence lorsqu'il est exposé à un rayon ultraviolet sur le dessus de la couche de revêtement anti-corrosion, et une autre couche de revêtement anti-corrosion présente sur le dessus du colorant, dans lequel le substrat est un substrat en aluminium ou un substrat en alliage d'aluminium.

9. Substrat selon la revendication 8, dans lequel le revêtement anti-corrosion est un revêtement de conversion chimique au chrome (III).

10. Substrat selon la revendication 8 ou la revendication 9, dans lequel le colorant est un colorant Zyglo.

11. Dispositif comprenant un substrat revêtu selon l'une quelconque des revendications 7 à 10.

12. Dispositif selon la revendication 11, dans lequel le dispositif est un actionneur hypersustenté.
